# EUROPÄISCHE PATENTANMELDUNG

(11) **EP 1 674 555 A1**
(43) Veröffentlichungstag der Anmeldung: **28.06.2006**
(21) Anmeldenummer: 05027616.1
(22) Anmeldetag: 16.12.2005
(51) Int. Cl.: C10L 3/10, B01D 53/04, B01J 20/22

(54) **Adsorptive Anreicherung von Methan in Methan-haltigen Gasgemischen**

(30) Priorität: 20.12.2004 DE 102004061238
(71) Anmelder: BASF Aktiengesellschaft, 67056 Ludwigshafen (DE)
(72) Erfinder: Müller, Ulrich, Dr., 67435 Neustadt (DE); Hesse, Michael, Dr., 67549 Worms (DE); Pütter, Hermann, Dr., 67433 Neustadt (DE); Schubert, Markus, Dr., 67063 Ludwigshafen (DE); Mirsch, Detlef, DI., 34131 Kassel (DE)
(74) Vertreter: Isenbruck, Günter

(57) **Zusammenfassung**

Die vorliegende Erfindung betrifft ein Verfahren zur Anreichung von Methan in Methanhaltigen Gasgemischen vorzugsweise Erdgas oder erdgashaltige Gemische, wobei das Gasgemisch mit einem porösen metallorganischen Gerüstmaterial in Kontakt gebracht wird.

## Beschreibung

Die vorliegende Erfindung betrifft ein Verfahren zur Anreicherung von Methan in Methan-haltigen Gasgemischen mit Hilfe mindestens eines porösen metallorganischen Gerüstmaterials sowie dessen Verwendung.

Methan stellt einen wichtigen Energielieferanten dar und dient zudem als Ausgangsstoff für eine Reihe wichtiger Synthesen. Als wichtigste natürliche Methanquelle ist Erdgas zu nennen, bei dem Methan den Hauptbestandteil darstellt. Daher ist eine Alternative der Gewinnung in großtechnischem Maßstab dessen Abtrennung aus Erdgas. Weiterhin kann Methan durch Crack- oder Schwelprozesse hergestellt werden oder aus Kohlenmonoxid bzw. Kohlendioxid und Wasserstoff.

Die häufigste Methode zur Abtrennung von Methan aus Erdgas oder der Anreicherung von Methan aus methanhaltigen Erdgasgemischen erfolgt durch TieftemperaturDruckdestillation. Hierbei ist insbesondere von Interesse die Abtrennung von Methan und höheren Kohlenwasserstoffen, insbesondere Ethan, Propan und Butan. Dieser Trennung gehen üblicherweise ein Entschwefelungsschritt sowie die Entfernung von Kohlendioxid voraus. Ebenso ist der Tieftemperaturdruckdestillation ein Trocknungsschritt vorgeschaltet.

Die Abtrennung des Kohlendioxids kann beispielsweise adsorptiv mit Hilfe von Zeolithen erfolgen. Ein solches Verfahren ist beispielsweise in US-A 3,751,878 beschrieben. Alternativ kann eine so genannte Aminwäsche durchgeführt werden.

Adsorptive Verfahren stellen eine häufig kostengünstigere Alternative zur Trennung und Aufreinigung von Gemischen im Vergleich zu destillativen Methoden dar. Dies gilt insbesondere bei der Auftrennung oder Aufreinigung von Gasen, die zur destillativen Trennung zunächst in die flüssige Phase überführt werden müssen. Ein weit verbreitetes Adsorbens ist Aktivkohle. Dieses ist jedoch aus sicherheitstechnischen Gründen problematisch, da beispielsweise bei dessen Regeneration so genannte Schwelnester entstehen können, die wiederum eine Brandgefahr darstellen.

Wie oben erwähnt, stellen zeolithische Molekularsiebe Alternativen zur Aktivkohle dar. Deren Effizienz ist jedoch in Bezug auf die Aufnahmekapazität und deren Trennwirkung begrenzt. Dies gilt insbesondere im Hinblick auf die Anreicherung von Methan in methanhaltigen Gasgemischen wie Erdgas. Weitere Nachteile von Zeolithen liegen in der hohen Sorptionsenergie sowie einer nachteiligen Kinetik bei der Trennung, die sich beispielsweise darin zeigen kann, dass mit hohen Gasströmen gearbeitet werden muss.

Aufgabe der vorliegenden Erfindung ist es daher, ein Verfahren bereitzustellen, um mit Hilfe eines neuen Sorbens eine verbesserte Anreicherung von Methan in Methan-haltigen Gasgemischen zu erreichen oder einen höheren Durchsatz bei der Anreicherung zu erzielen.

Die Aufgabe wird gelöst durch ein erfindungsgemäßes Verfahren zur Anreicherung von Methan in Methan-haltigen Gasgemischen den Schritt umfassend:
In Kontaktbringen des Gasgemisches mit mindestens einem Sorbens enthaltend ein poröses metallorganisches Gerüstmaterial, wobei das Gerüstmaterial mindestens eine an mindestens ein Metallion koordinativ gebundene, mindestens zweizähnige organische Verbindung enthält.

Es wurde nämlich gefunden, dass das poröse metallorganische Gerüstmaterial (Englisch: "Metal-Organic-Framework (MOF)") eine effizientere Anreicherung von Methan in methanhaltigen Gasgemischen erzielt, wobei die Anreicherung beispielsweise durch adsorptives Entfernen niederer Alkane wie Ethan, Propan oder Butan, im Vergleich zu Molekularsieben, erfolgen kann.

Vorzugsweise handelt es sich bei dem methanhaltigen Gasgemisch um Erdgas oder um ein Gemisch, das Erdgas enthält. Üblicherweise beträgt der Methangehalt in dem Methan-haltigen Gasgemisch mindestens 33 Vol.-%, vorzugsweise mindestens 50 Vol.-%, besonders bevorzugt mindesten 70 Vol.-% und am meisten bevorzugt mindestens 85 Vol.-%.

Vorzugsweise erfolgt die Anreicherung des Methans durch Abtrennung von C2- bis C4-ALkanen aus dem Methan-haltigen Gasgemisch. Die Abtrennung von C2- bis C4-Alkanen durch das Sorbens kann für einzelne Alkane - also Ethan, Propan, Butan oder Isobutan - selektiv erfolgen oder Gemische zweier oder mehrerer dieser Alkane können abgetrennt werden. Besonders bevorzugt ist die Abtrennung von Ethan-haltigen Alkanen oder von Ethan.

Die Reinheit eines solchen Einzelgases beträgt üblicherweise 97 Vol.-%, vorzugsweise 99,5 Vol.-% und besonders bevorzugt 99,9 Vol.-%.

Weiterhin kann die Anreicherung von Methan durch Abtrennung von Gasen wie beispielsweise Kohlendioxid oder weiterer Kohlenwasserstoffe, wie Pentan, erfolgen. Ebenso ist es möglich, dass neben der Abtrennung von C2- bis C4-Alkanen weitere Gase mit abgetrennt werden. Insbesondere kann Pentan mit einem Gasgemisch, das C2- bis C4-Alkane enthält, mit abgetrennt werden. Auch höher siedende Kohlenwasserstoffe können abgetrennt werden.

Der Anteil an Gasen oder Gasgemischen, die während der Anreicherung von Methan abgetrennt werden, beträgt vor der Anreicherung vorzugsweise höchstens 67 Vol.-%, mehr bevorzugt höchstens 30 Vol.-%, insbesondere höchstens 20 Vol.-% und am meisten bevorzugt höchstens 10 Vol.-%.

Der Anteil an C2- bis C4-Alkanen im Methan-haltigen Gasgemisch (sofern vorhanden) vor Anreicherung des Methans beträgt vorzugsweise höchstens 25 Vol.-%, mehr bevorzugt höchstens 20 Vol.-%, insbesondere höchstens 15 Vol.-% und am meisten bevorzugt höchstens 10 Vol.-%.

Der Anteil an Ethan im Methan-haltigen Gasgemisch (sofern vorhanden) beträgt vor Anreicherung des Methans vorzugsweise höchstens 25 Vol.%, mehr bevorzugt höchstens 15 Vol.-% und am meisten bevorzugt höchstens 8 Vol.%.

Das in Kontaktbringen des Gasgemisches wird bevorzugt durch kontinuierliche Adsorption an einem Festbett durchgeführt. Hierbei wird das Gasgemisch durch das Sorptionsbett durchgeleitet. Weiterhin bevorzugt findet die kontinuierliche Adsorption in einem oder mehreren Schacht- oder Rohrreaktoren, insbesondere in einem oder zwei Schachtreaktoren, statt, wobei mindestens ein Reaktor mit einem Adsorbens gefüllt ist, das ein poröses metallorganisches Gerüstmaterial enthält. Es sind ebenfalls Reaktorkaskaden denkbar. Ein Reaktor kann eine Teilfüllung mit porösem metallorganischen Gerüstmaterial oder ein Kombibett beispielsweise mit zusätzlichen anderen Adsorbentien enthalten.

Das erfindungsgemäße Verfahren wird bei einem Druck durchgeführt, der im Bereich von 1 bar (Atmosphärendruck) bis 325 bar liegt. Besonders bevorzugt liegt der Druck in einem Bereich von 1 bar bis 250 bar, insbesondere zwischen 1 und 100 bar und am meisten bevorzugt zwischen 1 und 80 bar.

Die Temperatur des Gasgemisches beim Inkontaktbringen mit dem Sorbens, welches ein poröses metallorganisches Gerüstmaterial enthält, beträgt vorzugsweise etwa 5°C. Sowohl höhere als auch niedrigere Temperaturen können jedoch angewandt werden. So sind auch Temperaturen aus einem Bereich von -100°C bis + 450°C denkbar. Eine typische Temperatur liegt im Bereich von -20°C bis +30°C, vorzugsweise von 0°C bis 10°C.

Das Gasgemisch wird vorzugsweise mit einer volumenbezogenen Flussrate pro Adsorbensvolumen (GHSV = Gas Hourly Space Velocity) von 250 1/h bis 10000 1/h, besonders bevorzugt von 250 1/h bis 2500 1/h mit dem Sorbens in Kontakt gebracht.

Das Gasgemisch kann mit dem ein poröses metallorganisches Gerüstmaterial enthaltenden Sorbens einmalig in Kontakt gebracht werden oder mehrmals. Vorzugsweise werden mehrere Zyklen durchgeführt. Hierbei wird nach dem Inkontaktbringen das bereits mit Methan angereicherte Methan-haltige Gasgemisch nochmals mit dem Sorbens in Kontakt gebracht. Hierdurch kann eine erhöhte Anreicherung erzielt werden.

Die Desorption des abgetrennten und sich auf dem Adsorbens befindlichen Gases oder Gasgemisches kann mittels Stickstoff-Spülgas unter Bedingungen durchgeführt werden, bei denen auch die Abtrennung (Anreicherung) durchgeführt wird. Weitere Möglichkeiten zur Desorption bestehen mittels Druck- bzw. Temperaturänderung. Vorzugsweise findet die Desorption unter Druckänderung statt. Die Art und Weise, wie eine Desorption durchgeführt werden kann, ist dem Fachmann bekannt. Anleitungen hierzu finden sich beispielsweise in Werner Kast, "Adsorption aus der Gasphase", Verlag VCH, Weinheim, 1988.

Das poröse metallorganische Gerüstmaterial enthält mindestens eine an mindestens ein Metallion koordinativ gebundene mindestens zweizähnige organische Verbindung. Dieses metallorganische Gerüstmaterial (MOF) wird beispielsweise beschrieben in US 5,648,508, EP-A-0 790 253, M. O-Keeffe et al., J. Sol. State Chem., 152 (2000), Seite 3 bis 20, H. Li et al., Nature of Unit 2, (1999), Seite 276, M. Eddaoudi et al., Topics in Catalysis 9, (1999), Seite 105 bis 111, B. Chen et al., Science 291, (2001), Seite 1021 bis 1023 und DE-A-101 11 230.

Die MOF's gemäß der vorliegenden Erfindung enthalten Poren, insbesondere Mirko- und/oder Mesoporen. Mikroporen sind definiert als solche mit einem Durchmesser von 2 nm oder kleiner und Mesoporen sind definiert durch einen Durchmesser im Bereich von 2 bis 50 nm, jeweils entsprechend nach der Definition, wie sie Pure Applied Chem. 45, Seite 71, insbesondere auf Seite 79 (1976) angegeben ist. Die Anwesenheit von Mikro- und/oder Mesoporen kann mit Hilfe von Sorptionsmessungen überprüft werden, wobei diese Messungen die Aufnahmekapazität der MOF für Stickstoff bei 77 Kelvin gemäß DIN 66131 und/oder DIN 66134 bestimmt.

Vorzugsweise beträgt die spezifische Oberfläche - berechnet nach dem Langmuir-Modell (DIN 66131, 66134) für ein MOF in Pulverform bei mehr als 5 m²/g, mehr bevorzugt über 10 m²/g, mehr bevorzugt mehr als 50 m²/g, weiter mehr bevorzugt mehr als 500 m²/g, weiter mehr bevorzugt mehr als 1000 m²/g und besonders bevorzugt mehr als 1500 m²/g.

MOF Formkörper können eine niedrigere aktive Oberfläche besitzen; vorzugsweise jedoch mehr als 10 m²/g, mehr bevorzugt mehr als 50 m²/g, weiter mehr bevorzugt mehr als 500 m²/g.

Die Metallkomponente im Gerüstmaterial nach der vorliegenden Erfindung ist vorzugsweise ausgewählt aus den Gruppen Ia, IIa, IIIa, IVa bis VIIIa und Ib bis Vlb. Besonders bevorzugt sind Mg, Ca, Sr, Ba, Sc, Y, Ti, Zr, Hf, V, Nb, Ta, Cr, Mo, W, Mn, Re, Fe, Ro, Os, Co, Rh, Ir, Ni, Pd, Pt, Cu, Ag, Au, Zn, Cd, Hg, Al, Ga, In, TI, Si, Ge, Sn, Pb, As, Sb und Bi. Mehr bevorzugt sind Zn, Cu, Ni, Pd, Pt, Ru, Rh und Co. In Bezug auf die Ionen dieser Elemente sind besonders zu erwähnen Mg²⁺, Ca²⁺, Sr²⁺, Ba²⁺, Sc³⁺, Y³⁺, Ti⁴⁺, Zr⁴⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ und Bi⁺.

Der Begriff "mindestens zweizähnige organische Verbindung" bezeichnet eine organische Verbindung, die mindestens eine funktionelle Gruppe enthält, die in der Lage ist, zu einem gegebenen Metallion mindestens zwei, bevorzugt zwei koordinative Bindungen, und/oder zu zwei oder mehr, bevorzugt zwei Metallatomen jeweils eine koordinative Bindung auszubilden.

Als funktionelle Gruppen, über die die genannten koordinativen Bindungen ausgebildet werden kann, sind insbesondere beispielsweise folgende funktionellen Gruppen zu nennen: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, -C(RSH)₃ -CH(RNH₂)₂ -C(RNH₂)₃, -CH(ROH)₂, -C(ROH)₃, -CH(RCN)₂, -C(RCN)₃ wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Butylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestes jeweils einem Substituenten geeignet substituiert sein können, und/oder die unabhängig voneinander jeweils mindestens ein Heteroatom wie beispielsweise N, O und/oder S enthalten können. Gemäß ebenfalls bevorzugter Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)₂, -C(NH₂)₃, -CH(OH)₂, -C(OH)₃, -CH(CN)₂ oder-C(CN)₃ zu nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 15, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, Al, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridyl zu nennen.

Beispielsweise sind unter anderem trans-Muconsäure oder Fumarsäure oder Phenylenbisacrylsäure zu nennen.

Beispielsweise sind im Rahmen der vorliegenden Erfindung Dicarbonsäuren wie etwa Oxalsäure, Bernsteinsäure, Weinsäure, 1,4-Butandicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methyl-chinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-Isopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octadicarbonsäure, Pentan-3,3-dicarbonsäure, 4,4'-Diamino-1,1'-diphenyl-3,3'-dicarbon-säure, 4,4'-Diaminodiphenyl-3,3'-dicarbonsäure, Benzidin-3,3'-dicarbonsäure, 1,4-bis-(Phenylamino)-benzol-2,5-dicarbonsäure, 1,1'-Dinaphthyl-2,2'-dicarbonsäure, 7-Chlor-8-methylchinolin-2,3-dicarbonsäure, 1-Anilinoanthrachinon-2,4'-dicarbonsäure, Polytetrahydrofuran-250-dicarbonsäure, 1,4-bis-(Carboxymethyl)-piperazin-2,3-dicarbon-säure, 7-Chlor-chinolin-3,8-dicarbonsäure, 1-(4-Carboxy)-phenyl-3-(4-chlor)-phenyl-pyrazolin-4,5-dicarbonsäure, 1,4,5,6,7,7,-Hexachlor-5-norbornen-2,3-dicarbonsäure, Phenylindandicarbonsäure, 1,3-Dibenzyl-2-oxo-imidazolidin-4,5-dicarbonsäure, 1,4-Cyclohexandicarbonsäure, Naphthalin-1,8-dicarbonsäure, 2-Benzoylbenzol-1,3-dicarbonsäure, 1,3-Dibenzyl-2-oxo-imidazolidin-4,5-cis-dicarbonsäure, 2,2'-Bichinolin-4,4'-dicarbonsäure, Pyridin-3,4-dicarbonsäure, 3,6,9-Trioxaundecan-dicarbonsäure, O-Hydroxy-benzophenon-dicarbonsäure, Pluriol E 300-dicarbonsäure, Pluriol E 400-dicarbonsäure, Pluriol E 600-dicarbonsäure, Pyrazol-3,4-dicarbonsäure, 2,3-Pyrazindicarbonsäure, 5,6-Dimethyl-2,3-pyrazin-dicarbonsäure, 4,4'-Diaminodiphenylether-diimiddicarbonsäure, 4,4'-Diaminodiphenylmethan-dümiddicarbonsäure, 4,4'-Diaminodiphenylsulfon-dümiddicarbonsäure, 2,6-Naphthalindicarbonsäure, 1,3-Adamantandicarbonsäure, 1,8-Naphthalindicarbonsäure, 2,3-Naphthalindicarbonsäure, 8-Methoxy-2,3-naphthalindicarbonsäure, 8-Nitro-2,3-naphthalindicarbonsäure, 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1 H)-Oxo-thiochromen-2,8-dicarbonsäure, 5-tert-Butyl -1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptandicarbonsäure, 5-Hydroxy-1,3-Benzoldicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxy-diphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Dichlorfluorubin-4,11-dicarbonsäure, 7-Chlor-3-mtehylchinolin -6,8-dicarbonsäure, 2,4-Dichlorbenzophenon-2',5'-dicarbonsäure, 1,3-benzoldicarbonsäure, 2,6-Pyridindicarbonsäure, 1 -Methylpyrrol-3,4-dicarbonsäure, 1 -Benzyl-1 H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure oder 5-Ethyl-2,3-Pyridindicarbonsäure,

### Tricarbonsäuren wie etwa

2-Hydroxy-1,2,3-propantricarbonsäure, 7-Chlor-2,3,8-chinolintricarbonsäure, 1,2,4-Benzoltricarbonsäure, 1,2,4-Butantricarbonsäure, 2-Phosphono-1,2,4-butantricarbonsäure, 1,3,5-Benzoltricarbonsäure, 1 -Hydroxy-1,2,3-Propantricarbonsäure, 4,5-Di-hydro-4,5-dioxo-1H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbonsäure, 1,2,3-Propantricarbonsäure oder Aurintricarbonsäure,
oder Tetracarbonsäuren wie etwa
1,1-Dioxid-perylo[1,12-BCD]thiophen-3,4,9,10-tetracarbonsäure, Perylentetracarbonsäuren wie Perylen-3,4,9,10-tetracarbonsäure oder oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan-1,2,3,4-tetracarbonsäure
zu nennen.

Ganz besonders bevorzugt werden gegebenenfalls mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P, Si, Al, bevorzugte Heteroatome sind hierbei N, S und/oder 0. Als geeigneter Substituent ist diesbezüglich unter anderem -OH, eine Nitrogruppe, eine Aminogruppe oder eine Alkyl- oder Alkoxygruppe zu nennen.

Insbesondere bevorzugt werden als mindestens zweizähnige organische Verbindungen Acetylendicarbonsäure (ADC), Benzoldicarbonsäuren, Naphthalindicarbonsäuren, Biphenyldicarbonsäuren wie beispielsweise 4,4'-Biphenyldicarbonsäure (BPDC), Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-Benzoltricarbonsäure oder 1,3,5-Benzoltricarbonsäure (BTC), Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC) eingesetzt.

Ganz besonders bevorzugt werden unter anderem Isophthalsäure, Terephthalsäure, 2,5-Dihydroxyterephthalsäure, 1,2,3-Benzoltricarbonsäure, 1,3,5-Benzoltricarbonsäure oder 2,2'-Bipyridin-5,5'-dicarbonsäure eingesetzt.

Neben diesen mindestens zweizähnigen organischen Verbindungen kann der MOF auch eine oder mehrere einzähnige Liganden umfassen.

Geeignete Lösemittel zur Herstellung der MOF sind u.a. Ethanol, Dimethylformamid, Toluol, Methanol, Chlorbenzol, Diethylformamid, Dimethylsulfoxid, Wasser, Wasserstoffperoxid, Methylamin, Natronlauge, Acetonitril, Benzyl-chlorid, Triethylamin, Ethylenglykol und Gemische hiervon.

Weitere Metallionen, mindestens zweizähnige organische Verbindungen und Lösemittel für die Herstellung von MOF sind u.a. in US-A 5,648,508 oder DE-A 101 11 230 beschrieben.

Die Porengröße des MOF kann durch Wahl des geeigneten Liganden und/oder der mindestens zweizähnigen organischen Verbindung gesteuert werden. Allgemein gilt, dass je größer die organische Verbindung desto größer die Porengröße ist. Vorzugsweise beträgt die Porengröße von 0,2 nm bis 30 nm, besonders bevorzugt liegt die Porengröße im Bereich von 0,3 nm bis 3 nm bezogen auf das kristalline Material.

In einem MOF-Formkörper treten jedoch auch größere Poren auf, deren Größenverteilung variieren kann. Vorzugsweise wird jedoch mehr als 50 % des gesamten Porenvolumens, insbesondere mehr als 75 %, von Poren mit einem Porendurchmesser von bis zu 1000 nm gebildet. Vorzugsweise wird jedoch ein Großteil des Porenvolumens von Poren aus zwei Durchmesserbereichen gebildet. Es ist daher weiter bevorzugt, wenn mehr als 25 % des gesamten Porenvolumens, insbesondere mehr als 50 % des gesamten Porenvolumens von Poren gebildet wird, die in einem Durchmesserbereich von 100 nm bis 800 nm liegen und wenn mehr als 15 % des gesamten Porenvolumens, insbesondere mehr als 25 % des gesamten Porenvolumens von Poren gebildet wird, die in einem Durchmesserbereich oder bis zu 10 nm liegen. Die Porenverteilung kann mittels Quecksilber-Porosimetrie bestimmt werden.

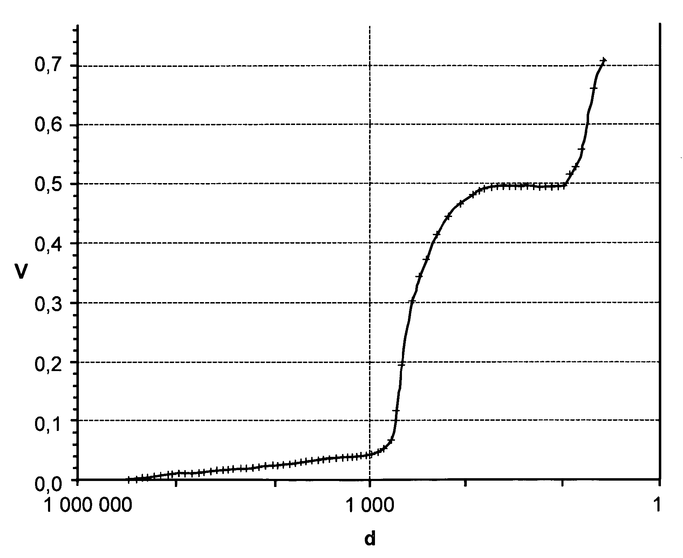

Figur 1 zeigt exemplarisch das kumulierte Porenvolumen (V) in Abhängigkeit zum Porendurchmesser (d) für einen Cu-MOF Strang.

Nachfolgend sind Beispiele für MOF's angegeben. Neben der Kennzeichnung des MOF, dem Metall sowie dem mindestens zweizähnigen Liganden ist weiterhin das Lösemittel sowie die Zellenparameter (Winkel α, β und γ sowie die Abstände A, B und C in Å) angegeben. Letztere wurden durch Röntgenbeugung bestimmt.

| **MOF-n** | **Inhaltsstoffe molares Verhältnis M+L** | **Solvens s** | α | β | γ | **a** | **b** | **c** | **Raum-gruppe** |
|---|---|---|---|---|---|---|---|---|---|
| MOF-0 | Zn(NO₃)₂·6H₂O H₃(BTC) | Ethanol | 90 | 90 | 120 | 16.711 | 16.711 | 14.189 | P6(3) Mcm |
| MOF-2 | Zn(NO₃)₂·6H₂O (0.246 mmol) H₂(BDC) 0.241 mmol) | DMF Toluen | 90 | 102.8 | 90 | 6.718 | 15.49 | 12.43 | P2(1)/n |
| MOF-3 | Zn(NO₃)₂·6H₂O (1.89 mmol) H₂(BDC) (1.93mmol) | DMF MeOH | 99.72 | 111.11 | 108.4 | 9.726 | 9.911 | 10.45 | P-1 |
| MOF-4 | Zn(NO₃)₂·6H₂O (1.00 mmol) H₃(BTC) (0.5 mmol) | Ethanol | 90 | 90 | 90 | 14.728 | 14.728 | 14.728 | P2(1)3 |
| MOF-5 | Zn(NO₃)₂·6H₂O (2.22 mmol) H₂(BDC) (2.17 mmol) | DMF Chlorbenzen | 90 | 90 | 90 | 25.669 | 25.669 | 25.669 | Fm-3m |
| MOF-38 | Zn(NO₃)₂·6H₂O | DMF | 90 | 90 | 90 | 20.657 | 20.657 | 17.84 | 14cm |
| | (0.27 mmol) H₃(BTC) (0.15 mmol) | Chlorbenzen | | | | | | | |
| MOF-31 Zn(ADC)₂ | Zn(NO₃)₂·6H₂O 0.4 mmol H₂(ADC) 0.8 mmol | Ethanol | 90 | 90 | 90 | 10.821 | 10.821 | 10.821 | Pn(-3)m |
| MOF-12 Zn₂(ATC) | Zn(NO₃)₂·6H₂O 0.3 mmol H₄(ATC) 0.15 mmol | Ethanol | 90 | 90 | 90 | 15.745 | 16.907 | 18.167 | Pbca |
| MOF-20 ZnNDC | Zn(NO₃)₂·6H₂O 0.37 mmol H₂NDC 0.36 mmol | DMF Chlorbenzen | 90 | 92.13 | 90 | 8.13 | 16.444 | 12.807 | P2(1)/c |
| MOF-37 | Zn(NO₃)₂·6H₂O 0.2 mmol H₂NDC 0.2 mmol | DEF Chlorbenzen | 72.38 | 83.16 | 84.33 | 9.952 | 11.576 | 15.556 | P-1 |
| MOF-8 Tb₂ (ADC) | Tb(NO₃)₃·5H₂O 0.10 mmol H₂ADC 0.20 mmol | DMSO MeOH | 90 | 115.7 | 90 | 19.83 | 9.822 | 19.183 | C2/c |
| MOF-9 Tb₂ (ADC) | Tb(NO₃)₃·5H₂O 0.08 mmol H₂ADB 0.12 mmol | DMSO | 90 | 102.09 | 90 | 27.056 | 16.795 | 28.139 | C2/c |
| MOF-6 | Tb(NO₃)₃·5H₂O 0.30 mmol H₂ (BDC) 0.30 mmol | DMF MeOH | 90 | 91.28 | 90 | 17.599 | 19.996 | 10.545 | P21/c |
| MOF-7 | Tb(NO₃)₃·5H₂O 0.15 mmol H₂(BDC) 0.15 mmol | H₂O | 102.3 | 91.12 | 101.5 | 6.142 | 10.069 | 10.096 | P-1 |
| MOF-69A | Zn(NO₃)₂·6H₂O 0.083 mmol 4,4'BPDC 0.041 mmol | DEF H₂O₂ MeNH₂ | 90 | 111.6 | 90 | 23.12 | 20.92 | 12 | C2/c |
| MOF-69B | Zn(NO₃)₂·6H₂O 0.083 mmol 2,6-NCD 0.041 mmol | DEF H₂O₂ MeNH₂ | 90 | 95.3 | 90 | 20.17 | 18.55 | 12.16 | C2/c |
| MOF-11 Cu₂(ATC) | Cu(NO₃)₂·2.5H₂O 0.47 mmol H₂ATC 0.22 mmol | H₂O | 90 | 93.86 | 90 | 12.987 | 11.22 | 11.336 | C2/c |
| MOF-11 Cu₂(ATC) dehydr. | | | 90 | 90 | 90 | 8.4671 | 8.4671 | 14.44 | P42/ mmc |
| MOF-14 Cu₃ (BTB) | Cu(NO₃)₂·2.5H₂O 0.28 mmol H₃BTB 0.052 mmol | H₂O DMF EtOH | 90 | 90 | 90 | 26.946 | 26.946 | 26.946 | Im-3 |
| MOF-32 Cd(ATC) | Cd(NO₃)₂·4H₂O 0.24 mmol H₄ATC 0.10 mmol | H₂O NaOH | 90 | 90 | 90 | 13.468 | 13.468 | 13.468 | P(-4)3m |
| MOF-33 Zn₂ (ATB) | ZnCl₂ 0.15 mmol H₄ATB 0.02 mmol | H₂O DMF EtOH | 90 | 90 | 90 | 19.561 | 15.255 | 23.404 | Imma |
| MOF-34 Ni(ATC) | Ni(NO₃)₂·6H₂O 0.24 mmol H₄ATC 0.10 mmol | H₂O NaOH | 90 | 90 | 90 | 10.066 | 11.163 | 19.201 | P2₁2₁2₁ |
| MOF-36 Zn₂ (MTB) | Zn(NO₃)₂·4H₂O 0.20 mmol H₄MTB 0.04 mmol | H₂O DMF | 90 | 90 | 90 | 15.745 | 16.907 | 18.167 | Pbca |
| MOF-39 Zn₃O(HBTB) | Zn(NO₃)₂ 4H₂O 0.27 mmol H₃BTB 0.07 mmol | H₂O DMF EtOH | 90 | 90 | 90 | 17.158 | 21.591 | 25.308 | Pnma |
| N0305 | FeCl₂·4H₂O 5.03 mmol Ameisensre. 86.90 mmol | DMF | 90 | 90 | 120 | 8.2692 | 8.2692 | 63.566 | R-3c |
| NO306A | FeCl₂·4H₂O 5.03 mmol Ameisensre. 86.90 mmol | DEF | 90 | 90 | 90 | 9.9364 | 18.374 | 18.374 | Pbcn |
| | | | | | | | | | |
| NO29 MOF-0 ähnlich | Mn(Ac)₂·4H₂O 0.46 mmol H₃BTC 0.69 mmol | DMF | | | 90 | 14.16 | 33.521 | 33.521 | P-1 |
| BPR48 A2 | Zn(NO₃)₂ 6H₂O 0.012 mmol H₂BDC 0.012 mmol | DMSO Toluen | | | 90 | 14.5 | 17.04 | 18.02 | Pbca |
| BPR69 B1 | Cd(NO₃)₂ 4H₂O 0.0212 mmol H₂BDC 0.0428 mmol | DMSO | | | 90 | 14.16 | 15.72 | 17.66 | Cc |
| BPR92 A2 | Co(NO₃)₂·6H₂O 0.018 mmol H₂BDC 0.018 mmol | NMP | 106.3 | 107.63 | 107.2 | 7.5308 | 10.942 | 11.025 | P1 |
| BPR95 C5 | Cd(NO₃)₂ 4H₂O 0.012 mmol H₂BDC 0.36 mmol | NMP | 90 | 112.8 | 90 | 14.460 | 11.085 | 15.829 | P2(1)/n |
| Cu C₆H₄O₆ | Cu(NO₃)₂·2.5H₂O 0.370 mmol H₂BDC(OH)₂ 0.37 mmol | DMF Chlorbenzen | 90 | 105.29 | 90 | 15.259 | 14.816 | 14.13 | P2(1)/c |
| M(BTC) MOF-0 ähn- lich | Co(SO₄) H₂O 0.055 mmol H₃BTC 0.037 mmol | DMF | wie MOF-0 | | | | | | |
| Tb(C₆H₄O₆) | Tb(NO₃)₃·5H₂O 0.370 mmol H₂(C₆H₄O₆) 0.56 mmol | DMF Chlorbenzen | 104.6 | 107.9 | 97.147 | 10.491 | 10.981 | 12.541 | P-1 |
| Zn (C₂O₄) | ZnCl₂ 0.370 mmol Oxalsäure 0.37 mmol | DMF Chlorbenzen | 90 | 120 | 90 | 9.4168 | 9.4168 | 8.464 | P(-3)1m |
| Co(CHO) | Co(NO₃)₂·5H₂O 0.043 mmol Ameisensre. 1.60 mmol | DMF | 90 | 91.32 | 90 | 11.328 | 10.049 | 14.854 | P2(1)/n |
| Cd(CHO) | Cd(NO₃)₂·4H₂O 0.185 mmol formic acid 0.185 mmol | DMF | 90 | 120 | 90 | 8.5168 | 8.5168 | 22.674 | R-3c |
| Cu(C₃H₂O₄) | Cu(NO₃)₂·2.5H₂O 0.043 mmol Malonsre. 0.192 mmol | DMF | 90 | 90 | 90 | 8.366 | 8.366 | 11.919 | P43 |
| Zn₆ (NDC)₅ MOF-48 | Zn(NO₃)₂·6H₂O 0.097 mmol 14 NDC 0.069 mmol | DMF Chlorbenzen H₂O₂ | 90 | 95.902 | 90 | 19.504 | 16.482 | 14.64 | C2/m |
| MOF-47 | Zn(NO₃)₂ 6H₂O 0.185 mmol H₂(BDC[CH₃]₄) 0.185 mmol | DMF Chlorbenzen H₂O₂ | 90 | 92.55 | 90 | 11.303 | 16.029 | 17.535 | P2(1)/c |
| MO25 | Cu(NO₃)₂·2.5H₂O 0.084 mmol BPhDC 0.085 mmol | DMF | 90 | 112.0 | 90 | 23.880 | 16.834 | 18.389 | P2(1)/c |
| Cu-Thio | Cu(NO₃)₂·2.5H₂O 0.084 mmol Thiophen Dicarbonsre. 0.085 mmol | DEF | 90 | 113.6 | 90 | 15.474 7 | 14.514 | 14.032 | P2(1)/c |
| CIBDC1 | Cu(NO₃)₂·2.5H₂O0. 084 mmol H₂(BDCCl₂) 0.085 mmol | DMF | 90 | 105.6 | 90 | 14.911 | 15.622 | 18.413 | C2/c |
| MOF-101 | Cu(NO₃)₂·2.5H₂O 0.084 mmol BrBDC 0.085 mmol | DMF | 90 | 90 | 90 | 21.607 | 20.607 | 20.073 | Fm3m |
| Zn₃(BTC)₂ | ZnCl₂ 0.033 mmol H₃BTC 0.033 mmol | DMF EtOH Base zugegeben | 90 | 90 | 90 | 26.572 | 26.572 | 26.572 | Fm-3m |
| MOF-j | Co(CH₃CO₂)₂·4H₂ O (1.65 mmol) H₃(BZC) (0.95 mmol) | H₂O | 90 | 112.0 | 90 | 17.482 | 12.963 | 6.559 | C2 |
| MOF-n | Zn(NO₃)₂·6H₂O H₃ (BTC) | Ethanol | 90 | 90 | 120 | 16.711 | 16.711 | 14.189 | P6(3)/mcm |
| PbBDC | Pb(NO₃)₂ (0.181 mmol) H₂(BDC) (0.181 mmol) | DMF Ethanol | 90 | 102.7 | 90 | 8.3639 | 17.991 | 9.9617 | P2(1)/n |
| Znhex | Zn(NO₃)₂·6H₂O (0.171 mmol) H₃BTB (0.114 mmol) | DMF p-Xylen Ethanol | 90 | 90 | 120 | 37.116 5 | 37.117 | 30.019 | P3(1)c |
| AS16 | FeBr₂ 0.927 mmol H₂(BDC) 0.927 mmol | DMF anhydr. | 90 | 90.13 | 90 | 7.2595 | 8.7894 | 19.484 | P2(1)c |
| AS27-2 | FeBr₂ 0.927 mmol H₃(BDC) 0.464 mmol | Dmf anhydr. | 90 | 90 | 90 | 26.735 | 26.735 | 26.735 | Fm3m |
| AS32 | FeCl₃ 1.23 mmol H₂(BDC) 1.23 mmol | DMF anhydr. Ethanol | 90 | 90 | 120 | 12.535 | 12.535 | 18.479 | P6(2)c |
| | | | | | | | | | |
| AS54-3 | FeBr₂ 0.927 BPDC 0.927 mmol | DMF anhydr. n-Propa-nol | 90 | 109.98 | 90 | 12.019 | 15.286 | 14.399 | C2 |
| AS61-4 | FeBr₂ 0.927 mmol m-BDC 0.927 mmol | Pyridin anhydr. | 90 | 90 | 120 | 13.017 | 13.017 | 14.896 | P6(2)c |
| AS68-7 | FeBr₂ 0.927 mmol m-BDC 1.204 mmol | DMF anhydr. Pyridin | 90 | 90 | 90 | 18.340 7 | 10.036 | 18.039 | Pca2₁ |
| Zn(ADC) | Zn(NO₃)₂·6H₂O 0.37 mmol H₂(ADC) 0.36 mmol | DMF Chlorbenzen | 90 | 99.85 | 90 | 16.764 | 9.349 | 9.635 | C2/c |
| MOF-12 Zn₂ (ATC) | Zn(NO₃)₂·6H₂O 0.30 mmol H₄(ATC) 0.15 mmol | Ethanol | 90 | 90 | 90 | 15.745 | 16.907 | 18.167 | Pbca |
| MOF-20 ZnNDC | Zn(NO₃)₂·6H₂O 0.37 mmol H₂NDC 0.36 mmol | DMF Chlorbenzen | 90 | 92.13 | 90 | 8.13 | 16.444 | 12.807 | P2(1)/c |
| MOF-37 | Zn(NO₃)₂·6H₂O 0.20 mmol H₂NDC 0.20 mmol | DEF Chlorbenzen | 72.38 | 83.16 | 84.33 | 9.952 | 11.576 | 15.556 | P-1 |
| Zn(NDC) (DMSO) | Zn(NO₃)₂·6H₂O H₂NDC | DMSO | 68.08 | 75.33 | 88.31 | 8.631 | 10.207 | 13.114 | P-1 |
| Zn(NDC) | Zn(NO₃)₂·6H₂O H₂NDC | | 90 | 99.2 | 90 | 19.289 | 17.628 | 15.052 | C2/c |
| Zn(HPDC) | Zn(NO₃)₂·4H₂O 0.23 mmol H₂(HPDC) 0.05 mmol | DMF H₂O | 107.9 | 105.06 | 94.4 | 8.326 | 12.085 | 13.767 | P-1 |
| Co(HPDC) | Co(NO₃)₂·6H₂O 0.21 mmol H₂ (HPDC) 0.06 mmol | DMF H₂O/ Ethanol | 90 | 97.69 | 90 | 29.677 | 9.63 | 7.981 | C2/c |
| Zn₃(PDC)2.5 | Zn(NO₃)₂·4H₂O 0.17 mmol H₂(HPDC) 0.05 mmol | DMF/ CIBz H₂0/ TEA | 79.34 | 80.8 | 85.83 | 8.564 | 14.046 | 26.428 | P-1 |
| Cd₂ (TPDC)2 | Cd(NO₃)₂·4H₂O 0.06 mmol H₂(HPDC) 0.06 mmol | Metha- nol/ CHP H₂O | 70.59 | 72.75 | 87.14 | 10.102 | 14.412 | 14.964 | P-1 |
| Tb(PDC)1.5 | Tb(NO₃)₃·5H₂O 0.21 mmol H₂(PDC) 0.034 mmol | DMF H₂O/ Ethanol | 109.8 | 103.61 | 100.14 | 9.829 | 12.11 | 14.628 | P-1 |
| | | | | | | | | | |
| ZnDBP | Zn(NO₃)₂·6H₂O 0.05 mmol Dibenzylphosphat 0.10 mmol | MeOH | 90 | 93.67 | 90 | 9.254 | 10.762 | 27.93 | P2/n |
| Zn₃(BPDC) | ZnBr₂ 0.021 mmol 4,4'BPDC 0.005 mmol | DMF | 90 | 102.76 | 90 | 11.49 | 14.79 | 19.18 | P21/n |
| CdBDC | Cd(NO₃)₂·4H₂O 0.100 mmol H₂(BDC) 0.401 mmol | DMF Na₂SiO ₃ (aq) | 90 | 95.85 | 90 | 11.2 | 11.11 | 16.71 | P21/n |
| Cd-mBDC | Cd(NO₃)₂·4H₂O 0.009 mmol H₂(mBDC) 0.018 mmol | DMF MeNH₂ | 90 | 101.1 | 90 | 13.69 | 18.25 | 14.91 | C2/c |
| Zn₄OBND C | Zn(NO₃)₂·6H₂O 0.041 mmol BNDC | DEF MeNH₂ H₂O₂ | 90 | 90 | 90 | 22.35 | 26.05 | 59.56 | Fmmm |
| Eu(TCA) | Eu(NO₃)₃·6H₂O 0.14 mmol TCA 0.026 mmol | DMF Chlor-benzen | 90 | 90 | 90 | 23.325 | 23.325 | 23.325 | Pm-3n |
| Tb(TCA) | Tb(NO₃)₃·6H₂O 0.069 mmol TCA 0.026 mmol | DMF Chlorbenzen | 90 | 90 | 90 | 23.272 | 23.272 | 23.372 | Pm-3n |
| Formate | Ce(NO₃)₃·6H₂O 0.138 mmol Ameisensre. 0.43 mmol | H₂O Ethanol | 90 | 90 | 120 | 10.668 | 10.667 | 4.107 | R-3m |
| | FeCl₂·4H₂O 5.03 mmol Ameisensre. 86.90 mmol | DMF | 90 | 90 | 120 | 8.2692 | 8.2692 | 63.566 | R-3c |
| | FeCl₂·4H₂O 5.03 mmol Ameisensre. 86.90 mmol | DEF | 90 | 90 | 90 | 9.9364 | 18.374 | 18.374 | Pbcn |
| | FeCl₂·4H₂O 5.03 mmol Ameisensre. 86.90 mmol | DEF | 90 | 90 | 90 | 8.335 | 8.335 | 13.34 | P-31c |
| NO330 | FeCl₂·4H₂O 0.50 mmol Ameisensre. 8.69 mmol | Form-amid | 90 | 90 | 90 | 8.7749 | 11.655 | 8.3297 | Pnna |
| NO332 | FeCl₂·4H₂O 0.50 mmol Ameisensre. 8.69 mmol | DIP | 90 | 90 | 90 | 10.031 3 | 18.808 | 18.355 | Pbcn |
| | | | | | | | | | |
| NO333 | FeCl₂·4H₂O 0.50 mmol Ameisensre. 8.69 mmol | DBF | 90 | 90 | 90 | 45.275 4 | 23.861 | 12.441 | Cmcm |
| NO335 | FeCl₂·4H₂O 0.50 mmol Ameisensre. 8.69 mmol | CHF | 90 | 91.372 | 90 | 11.596 4 | 10.187 | 14.945 | P21/n |
| NO336 | FeCl₂·4H₂O 0.50 mmol Ameisensre. 8.69 mmol | MFA | 90 | 90 | 90 | 11.794 5 | 48.843 | 8.4136 | Pbcm |
| NO13 | Mn(Ac)₂·4H₂O 0.46 mmol Benzoesre. 0.92 mmol Bipyridin 0.46 mmol | Ethanol | 90 | 90 | 90 | 18.66 | 11.762 | 9.418 | Pbcn |
| NO29 | Mn(Ac)₂·4H₂O | DMF | 120 | 90 | 90 | 14.16 | 33.521 | 33.521 | P-1 |
| MOF-0 ähnlich | 0.46 mmol H₃BTC 0.69 mmol | | | | | | | | |
| Mn(hfac)₂ (O₂CC₆H₅) | Mn(Ac)₂·4H₂O 0.46 mmol Hfac 0.92 mmol Bipyridin 0.46 mmol | Ether | 90 | 95.32 | 90 | 9.572 | 17.162 | 14.041 | C2/c |
| BPR43G2 | Zn(NO₃)₂·6H₂O 0.0288 mmol H₂BDC 0.0072 mmol | DMF CH₃CN | 90 | 91.37 | 90 | 17.96 | 6.38 | 7.19 | C2/c |
| BPR48A2 | Zn(NO₃)₂ 6H₂O 0.012 mmol H₂BDC 0.012 mmol | DMSO Toluen | 90 | 90 | 90 | 14.5 | 17.04 | 18.02 | Pbca |
| BPR49B1 | Zn(NO₃)₂ 6H₂O 0.024 mmol H₂BDC 0.048 mmol | DMSO Methanol | 90 | 91.172 | 90 | 33.181 | 9.824 | 17.884 | C2/c |
| BPR56E1 | Zn(NO₃)₂ 6H₂O 0.012 mmol H₂BDC 0.024 mmol | DMSO n-Propa-nol | 90 | 90.096 | 90 | 14.587 3 | 14.153 | 17.183 | P2(1)/n |
| BPR68D10 | Zn(NO₃)₂ 6H₂O 0.0016 mmol H₃BTC 0.0064 mmol | DMSO Benzen | 90 | 95.316 | 90 | 10.062 7 | 10.17 | 16.413 | P2(1)/c |
| BPR69B1 | Cd(NO₃)₂ 4H₂O 0.0212 mmol H₂BDC 0.0428 mmol | DMSO | 90 | 98.76 | 90 | 14.16 | 15.72 | 17.66 | Cc |
| | | | | | | | | | |
| BPR73E4 | Cd(NO₃)₂ 4H₂O 0.006 mmol H₂BDC 0.003 mmol | DMSO Toluen | 90 | 92.324 | 90 | 8.7231 | 7.0568 | 18.438 | P2(1)/n |
| BPR76D5 | Zn(NO₃)₂ 6H₂O 0.0009 mmol H₂BzPDC 0.0036 mmol | DMSO | 90 | 104.17 | 90 | 14.4191 | 6.2599 | 7.0611 | Pc |
| BPR80B5 | Cd(NO₃)₂ aH₂O 0.018 mmol H₂BDC 0.036 mmol | DMF | 90 | 115.11 | 90 | 28.049 | 9.184 | 17.837 | C2/c |
| BPR80H5 | Cd(NO₃)₂ 4H₂O 0.027 mmol H₂BDC 0.027 mmol | DMF | 90 | 119.06 | 90 | 11.474 6 | 6.2151 | 17.268 | P2/c |
| BPR82C6 | Cd(NO₃)₂ 4H₂O 0.0068 mmol H₂BDC 0.202 mmol | DMF | 90 | 90 | 90 | 9.7721 | 21.142 | 27.77 | Fdd2 |
| BPR86C3 | Co(NO₃)₂ 6H₂O 0.0025 mmol H₂BDC 0.075 mmol | DMF | 90 | 90 | 90 | 18.344 9 | 10.031 | 17.983 | Pca2(1) |
| BPR86H6 | Cd(NO₃)₂·6H₂O 0.010 mmol H₂BDC 0.010 mmol | DMF | 80.98 | 89.69 | 83.412 | 9.8752 | 10.263 | 15.362 | P-1 |
| | Co(NO₃)₂ 6H₂O | NMP | 106.3 | 107.63 | 107.2 | 7.5308 | 10.942 | 11.025 | P1 |
| BPR95A2 | Zn(NO₃)₂ 6H₂O 0.012 mmol H₂BDC 0.012 mmol | NMP | 90 | 102.9 | 90 | 7.4502 | 13.767 | 12.713 | P2(1)/c |
| CuC₆F₄O₄ | Cu(NO₃)₂·2.5H₂O 0.370 mmol H₂BDC(OH)₂ 0.37 mmol | DMF Chlorbenzen | 90 | 98.834 | 90 | 10.967 5 | 24.43 | 22.553 | P2(1)/n |
| Fe Formic | FeCl₂·4H₂O 0.370 mmol Ameisensre. 0.37 mmol | DMF | 90 | 91.543 | 90 | 11.495 | 9.963 | 14.48 | P2(1)/n |
| Mg Formic | Mg(NO₃)₂·6H₂O 0.370 mmol Ameisensre. 0.37 mmol | DMF | 90 | 91.359 | 90 | 11.383 | 9.932 | 14.656 | P2(1)/n |
| MgC₆H₄O₆ | Mg(NO₃)₂·6H₂O 0.370 mmol H₂BDC(OH)₂ 0.37 mmol | DMF | 90 | 96.624 | 90 | 17.245 | 9.943 | 9.273 | C2/c |
| Zn C₂H₄BDC MOF-38 | ZnCl₂ 0.44 mmol CBBDC 0.261 mmol | DMF | 90 | 94.714 | 90 | 7.3386 | 16.834 | 12.52 | P2(1)/n |
| MOF-49 | ZnCl₂ 0.44 mmol m-BDC 0.261 mmol | DMF CH₃CN | 90 | 93.459 | 90 | 13.509 | 11.984 | 27.039 | P2/c |
| MOF-26 | Cu(NO₃)₂·5H₂O 0.084 mmol DCPE 0.085 mmol | DMF | 90 | 95.607 | 90 | 20.879 7 | 16.017 | 26.176 | P2(1)/n |
| MOF-112 | Cu(NO₃)₂·2.5H₂O 0.084 mmol *o*-Br-*m*-BDC 0.085 mmol | DMF Ethanol | 90 | 107.49 | 90 | 29.324 1 | 21.297 | 18.069 | C2/c |
| MOF-109 | Cu(NO₃)₂·2.5H₂O 0.084 mmol KDB 0.085 mmol | DMF | 90 | 111.98 | 90 | 23.880 1 | 16.834 | 18.389 | P2(1)/c |
| MOF-111 | Cu(NO₃)₂·2.5H₂O 0.084 mmol o-BrBDC 0.085 mmol | DMF Ethanol | 90 | 102.16 | 90 | 10.676 7 | 18.781 | 21.052 | C2/c |
| MOF-110 | Cu(NO₃)₂·2.5H₂O 0.084 mmol Thiophen Dicarbonsre. 0.085 mmol | DMF | 90 | 90 | 120 | 20.065 2 | 20.065 | 20.747 | R-3/m |
| MOF-107 | Cu(NO₃)₂·2.5H₂O 0.084 mmol Thiophen Dicar-bonsre. 0.085 mmol | DEF | 104.8 | 97.075 | 95.20 6 | 11.032 | 18.067 | 18.452 | P-1 |
| MOF-108 | Cu(NO₃)₂·2.5H₂O 0.084 mmol Thiophen Dicarbonsre. 0.085 mmol | DBF/ Methanol | 90 | 113.63 | 90 | 15.474 7 | 14.514 | 14.032 | C2/c |
| MOF-102 | Cu(NO₃)₂·2.5H₂O 0.084 mmol H₂(BDCCl₂) 0.085 mmol | DMF | 91.63 | 106.24 | 112.0 1 | 9.3845 | 10.794 | 10.831 | P-1 |
| Clbdc1 | Cu(NO₃)₂·2.5H₂O 0.084 mmol H₂(BDCCl₂) 0.085 mmol | DEF | 90 | 105.56 | 90 | 14.911 | 15.622 | 18.413 | P-1 |
| Cu(NMOP) | Cu(NO₃)₂·2.5H₂O 0.084 mmol NBDC 0.085 mmol | DMF | 90 | 102.37 | 90 | 14.923 8 | 18.727 | 15.529 | P2(1)/m |
| Tb(BTC) | Tb(NO₃)₃·5H₂O 0.033 mmol H₃BTC 0.033 mmol | DMF | 90 | 106.02 | 90 | 18.698 6 | 11.368 | 19.721 | |
| Zn₃(BTC)₂ Honk | ZnCl₂ 0.033 mmol H₃BTC 0.033 mmol | DMF Ethanol | 90 | 90 | 90 | 26.572 | 26.572 | 26.572 | Fm-3m |
| Zn₄O(NDC) | Zn(NO₃)₂·4H₂O 0.066 mmol 14NDC 0.066 mmol | DMF Ethanol | 90 | 90 | 90 | 41.559 4 | 18.818 | 17.574 | aba2 |
| CdTDC | Cd(NO₃)₂·4H₂O 0.014 mmol Thiophen 0.040 mmol DABCO 0.020 mmol | DMF H₂O | 90 | 90 | 90 | 12.173 | 10.485 | 7.33 | Pmma |
| IRMOF-2 | Zn(NO₃)₂·4H₂O 0.160 mmol o-Br-BDC 0.60 mmol | DEF | 90 | 90 | 90 | 25.772 | 25.772 | 25.772 | Fm-3m |
| IRMOF-3 | Zn(NO₃)₂·4H₂O 0.20 mmol H₂N-BDC 0.60 mmol | DEF Ethanol | 90 | 90 | 90 | 25.747 | 25.747 | 25.747 | Fm-3m |
| IRMOF-4 | Zn(NO₃)₂·4H₂O 0.11 mmol [C₃H₇O]₂-BDC 0.48 mmol | DEF | 90 | 90 | 90 | 25.849 | 25.849 | 25.849 | Fm-3m |
| IRMOF-5 | Zn(NO₃)₂·4H₂O 0.13 mmol [C₅H₁₁O]₂-BDC 0.50 mmol | DEF | 90 | 90 | 90 | 12.882 | 12.882 | 12.882 | Pm-3m |
| IRMOF-6 | Zn(NO₃)₂·4H₂O 0.20 mmol [C₂H₄]-BDC 0.60 mmol | DEF | 90 | 90 | 90 | 25.842 | 25.842 | 25.842 | Fm-3m |
| IRMOF-7 | Zn(NO₃)₂·4H₂O 0.07 mmol 1,4NDC 0.20 mmol | DEF | 90 | 90 | 90 | 12.914 | 12.914 | 12.914 | Pm-3m |
| IRMOF-8 | Zn(NO₃)₂·4H₂O 0.55 mmol 2,6NDC 0.42 mmol | DEF | 90 | 90 | 90 | 30.092 | 30.092 | 30.092 | Fm-3m |
| IRMOF-9 | Zn(NO₃)₂·4H₂O 0.05 mmol BPDC 0.42 mmol | DEF | 90 | 90 | 90 | 17.147 | 23.322 | 25.255 | Pnnm |
| IRMOF-10 | Zn(NO₃)₂·4H₂O 0.02 mmol BPDC 0.012 mmol | DEF | 90 | 90 | 90 | 34.281 | 34.281 | 34.281 | Fm-3m |
| IRMOF-11 | Zn(NO₃)₂·4H₂O 0.05 mmol HPDC 0.20 mmol | DEF | 90 | 90 | 90 | 24.822 | 24.822 | 56.734 | R-3m |
| IRMOF-12 | Zn(NO₃)₂·4H₂O 0.017 mmol HPDC 0.12 mmol | DEF | 90 | 90 | 90 | 34.281 | 34.281 | 34.281 | Fm-3m |
| | | | | | | | | | |
| IRMOF-13 | Zn(NO₃)₂·4H₂O 0.048 mmol PDC 0.31 mmol | DEF | 90 | 90 | 90 | 24.822 | 24.822 | 56.734 | R-3m |
| IRMOF-14 | Zn(NO₃)₂·4H₂O 0.17 PDC 0.12 mmol | DEF | 90 | 90 | 90 | 34.381 | 34.381 | 34.381 | Fm-3m |
| IRMOF-15 | Zn(NO₃)₂·4H₂O 0.063 mmol TPDC 0.025 mmol | DEF | 90 | 90 | 90 | 21.459 | 21.459 | 21.459 | Im-3m |
| IRMOF-16 | Zn(NO₃)₂·4H₂O 0.0126 mmol TPDC 0.05 mmol | DEF NMP | 90 | 90 | 90 | 21.49 | 21.49 | 21.49 | Pm-3m |

- ADC: Acetylenedicarbonsäure
- NDC: Naphtalindicarbonsäure
- BDC: Benzoldicarbonsäure
- ATC: Adamantantetracarbonsäure
- BTC: Benzoltricarbonsäure
- BTB: Benzoltribenzoesäure
- MTB: Methantetrabenzoesäure
- ATB: Adamantantetrabenzoesäure
- ADB: Adamantandibenzoesäure

Weitere MOF sind MOF-177 und MOF-178, welche in der Literatur beschrieben sind.

Neben der konventionellen Methode zur Herstellung der MOF, wie sie beispielsweise in US 5,648,508 beschrieben ist, können diese auch auf elektrochemischem Wege hergestellt werden. Diesbezüglich wird auf DE-A 103 55 087 sowie die WO-A 2005/049892 verwiesen. Die auf diesem Weg hergestellten MOFs weisen besonders gute Eigenschaften in Zusammenhang mit der Adsorption und Desorption von chemischen Stoffen, insbesondere von Gasen. Sie unterscheiden sich somit von denen, die konventionell hergestellt werden, auch wenn diese aus den gleichen organischen und Metallionenbestandteilen gebildet werden und sind daher als neue Gerüstmaterialien zu betrachten. Im Rahmen der vorliegenden Erfindung sind elektrochemisch hergestellte MOFs besonders bevorzugt.

Demgemäß betrifft die elektrochemischen Herstellung ein kristallines poröses metallorganischen Gerüstmaterial, enthaltend mindestens eine an mindestens ein Metallion koordinativ gebundene, mindestens zweizähnige organische Verbindung, welches in einem Reaktionsmedium, enthaltend die mindestens eine zweizähnige organische Verbindung mindestens ein Metallion durch Oxidation mindestens einer das entsprechende Metall enthaltenden Anode erzeugt wird.

Der Begriff "elektrochemische Herstellung" bezeichnet ein Herstellverfahren, bei dem die Bildung mindestens eines Reaktionsproduktes mit der Wanderung von elektrischen Ladungen oder dem Auftreten von elektrischen Potentialen verbunden ist.

Der Begriff "mindestens ein Metallion", wie er im Zusammenhang mit der elektrochemischen Herstellung verwendet wird, bezeichnet Ausführungsformen, gemäß denen mindestens ein Ion eines Metalls oder mindestens ein Ion eines ersten Metalls und mindestens ein Ion mindestens eines vom ersten Metall verschiedenen zweiten Metalls durch anodische Oxidation bereit gestellt werden.

Demgemäß umfasst die elektrochemische Herstellung Ausführungsformen, in denen mindestens ein Ion mindestens eines Metalls durch anodische Oxidation und mindestens ein Ion mindestens eines Metalls über ein Metallsalz bereit gestellt werden, wobei das mindestens eine Metall im Metallsalz und das mindestens eine Metall, das über anodische Oxidation als Metallion bereit gestellt werden, gleich oder voneinander verschieden sein können. Daher umfasst die vorliegende Erfindung in Bezug auf elektrochemisch hergestellte MOF beispielsweise eine Ausführungsform, gemäß der das Reaktionsmedium ein oder mehrere unterschiedliche Salze eines Metalls enthält und das in diesem Salz oder in diesen Salzen enthaltene Metallion zusätzlich durch anodische Oxidation mindestens einer dieses Metall enthaltenden Anode bereitgestellt wird. Ebenso kann das Reaktionsmedium ein oder mehrere unterschiedliche Salze mindestens eines Metalls enthalten und mindestens ein von diesen Metallen unterschiedliches Metall kann über anodische Oxidation als Metallion im Reaktionsmedium bereitgestellt werden.

Gemäß einer bevorzugten Ausführungsform der vorliegenden Erfindung wird das mindestens eine Metallion durch anodische Oxidation mindestens einer der dieses mindestens eine Metall enthaltenden Anode bereitgestellt, wobei kein weiteres Metall über ein Metallsalz bereitgestellt wird.

Der Begriff "Metall", wie im Rahmen der vorliegenden Erfindung im Zusammenhang mit der elektrochemischen Herstellung von MOFs verwendet wird, umfasst sämtliche Elemente des Periodensystems, die über anodische Oxidation auf elektrochemischem Weg in einem Reaktionsmedium bereitgestellt werden können und mit mindestens einer mindestens zweizähnigen organischen Verbindungen mindestens ein metallorganisches poröses Gerüstmaterial zu bilden in der Lage sind.

Unabhängig von dessen Herstellung fällt das erhaltene MOF in pulverförmiger bzw. kristalliner Form an. Dieses kann als solches als Sorbens im erfindungsgemäßen Verfahren alleine oder zusammen mit anderen Sorbentien oder weiteren Materialien eingesetzt werden. Vorzugsweise geschieht dies als Schüttgut, insbesondere in einem Festbett. Weiterhin kann das MOF in einen Formkörper umgewandelt werden. Bevorzugte Verfahren sind hierbei die Verstrangung oder Tablettierung. Bei der Formkörperherstellung können zum MOF weiterer Materialien, wie beispielsweise Binder, Gleitmittel oder andere Additive hinzugesetzt werden. Ebenso ist es denkbar, dass Mischungen von MOF und anderen Adsorbentien beispielsweise Aktivkohle als Formkörper hergestellt werden oder getrennt Formkörper ergeben, die dann als Formkörpermischungen eingesetzt werden.

Hinsichtlich der möglichen Geometrien dieser MOF Formkörper existieren im Wesentlichen keine Beschränkungen. Beispielsweise sind unter anderem Pellets wie beispielsweise scheibenförmige Pellets, Pillen, Kugeln, Granulat, Extrudate wie beispielsweise Stränge, Waben, Gitter oder Hohlkörper zu nennen.

Zur Herstellung dieser Formkörper sind grundsätzlich sämtliche geeigneten Verfahren möglich. Es sind insbesondere folgende Verfahrensführungen bevorzugt:
- Kneten des Gerüstmaterials allein oder zusammen mit mindestens einem Bindemittel und/oder mindestens einem Anteigungsmittel und/oder mindestens einer Templatverbindung unter Erhalt eines Gemisches; Verformen des erhaltenen Gemisches mittels mindestens einer geeigneten Methode wie beispielsweise Extrudieren; optional Waschen und/oder Trocknen und/oder Calcinieren des Extrudates; optional Konfektionieren.
- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten und Verformen kann gemäß jedes geeigneten Verfahrens erfolgen, wie beispielsweise in Ullmanns Enzyklopädie der Technischen Chemie, 4. Auflage, Band 2, S. 313 ff. (1972) beschrieben, deren diesbezüglicher Inhalt durch Bezugnahme in den Kontext der vorliegenden Anmeldung vollumfänglich einbezogen wird.

Beispielsweise bevorzugt kann das Kneten und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders werden Pellets und/oder Tabletten hergestellt.

Das Kneten und/oder Verformen kann bei erhöhten Temperaturen wie beispielsweise im Bereich von Raumtemperatur bis 300 °C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl Viskositätserhöhende als auch Viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Hallosit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen. Insbesondere bevorzugt ist Graphit.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran eingesetzt werden.

Als Anteigungsmittel kann unter anderem bevorzugt Wasser oder mindestens ein Alkohol wie beipielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform wird der gemäß Kneten und/oder Verformen erhaltene Formkörper mindestens einer Trocknung unterzogen, die im Allgemeinen bei einer Temperatur im Bereich von 25 bis 300 °C, bevorzugt im Bereich von 50 bis 300 °C und besonders bevorzugt im Bereich von 100 bis 300 °C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Ein weiterer Gegenstand der Erfindung ist die Verwendung eines porösen metallorganischen Gerüstmaterials zur Anreicherung von Methan in einem Methan-haltigen Gasgemisch.

### Beispiele

### Beispiel 1

Als Sorbens nach dem Stand der Technik wird zeolithisches Molekularsieb 13X (Firma Zeochem, Schweiz, Typ Z10-05) verwendet. Als MOF-Material wird Zn-MOF-5 (Zink-Terephthalat) und Cu-MOF (Kupfer-1,3,5-Benzoltricarboxylat) eingesetzt, wobei letzteres auf elektrochemischem Weg hergestellt ist.

Die wichtigsten Materialeigenschaften der Sorbentien sind nachfolgend tabellarisch zusammengefasst.

**Tabelle 1:**

| **Bezeichnung** | **Sorbensform** | **Oberfläche (DIN 66131)** | **Schüttdichte (im Reaktor)** |
|---|---|---|---|
| **Molekularsieb** | 2,5 mm Kugeln | 700 m²/g | 680 g/l |
| **Zn-MOF-5** | 3x3 mm Tabletten | 960 m²/g | 510 g/l |
| **Cu-MOF** | 3 mm Strang | 810 m²/g | 420 g/l |

Ein Schachtreaktor wird mit den vorgenannten Sorbentien als Festbettschüttung beschickt und mit einer definierten Mischung aus Ethan-Methan (Reinheit jeweils 99,5 Vol.-%) und mit einem definierten Volumenstrom für einige Stunden beaufschlagt. Jeweils am Eingang und Ausgang des Reaktors wird das strömende Gasgemisch auf seine Zusammensetzung mittels IR-Spektroskopie analysiert. Das Spektrometer (Fa. Bruker, Typ Matrix M) wird vor Inbetriebnahme mit Prüfgas (Reinheit 99,5 Vol.-%) kalibriert.

Aus der zeitlichen Verfolgung der Gasgemischzusammensetzung nach dem Reaktor wird die dynamische Speicherkapazität der jeweiligen Sorbentien ermittelt.

Die Desorption des abgetrennten und sich auf dem Sorbens befindlichen Ethan wird mittels Stickstoffspülgas bei 30 bar oder auch verminderten Druck erzielt. Folgende Versuchsparameter sind in Tabelle 2 zusammengestellt:

**Tabelle 2:**

| **Kenngröße** | |
|---|---|
| **Reaktor** | 16 mm Durchmesser, 2000 mm Länge |
| **Betriebsdruck** | 30 bar |
| **Betriebstemperatur** | ca. 25°C |
| **Reaktorvolumen** | ca. 400 ml |
| **Methan** | 250 NI/h |
| **Ethan** | 20 NI/h |
| **GHSV** | 675 h⁻¹ |
| **Verweilzeit (Leerrohr)** | ca. 5 s |
| **Lineargeschwindigkeit** | ca. 35 cm/s |
| **Querschnittsbeiastung** | ca. 150 l/cm²/h |

Bezogen auf die im Reaktor eingebaute Sorbensmasse ergibt sich daraus die massenspezifische Speicherkapazität. Tabelle 3 zeigt die dynamischen Aufnahmekapazitäten für Ethan bei einem Zyklus.

**Tabelle 3**

| **Probe** | **Massenkapazität (g Ethan/kg)** |
|---|---|
| **Molekularsieb** | 77 |
| **Zn-MOF-5** | 82 |
| **Cu-MOF** | 138 |

Weiterhin wurden für die Sorbentien bis zu 8 aufeinander folgende Zyklen aus Adsorption/Desorption/Inertspülen gefahren und dabei keine Desaktivierung der Sorbentien beobachtet. Es ist erkennbar, dass Zink-MOF-5 und Cu-MOF massenspezifisch besser liegen. Insbesondere zeigt der auf elektrochemischem Wege hergestellte Cu-MOF einen besonders guten Wert.

Hinsichtlich der Kinetik beim Desorbieren und anschließenden Spülen mit Inertstickstoff ist zu beobachten, dass dies bei den MOF-Proben ca. 20 % schneller abläuft als beim zeolithischen Molekularsieb.

### Beispiel 2

Konfektionierunq eines hochkalorischen Erdqases an einem MOF-qefüllten Adsorber Ein hochkalorisches Erdgas mit folgender Zusammensetzung 85,8% Methan, 8,76% Ethan, 1,58% Propan, 0,31% Butane, 0,04% Pentane, 0,01% C₆₊, 2,17% CO₂ und 1,31% N₂ (Brennwert 11,79 kWh/Nm³) wird mit einer Eintrittstemperatur von ca. 5°C über ein Adsorberbett mit 416 g Cu-Benzoltricarbonsäure-MOF in Form von 1,5 mm Strängen geleitet. Ein Zyklus besteht aus vier Phasen. Diese Zyklen werden mehrfach wiederholt. In der ersten Phase wird der Adsorber zunächst mit reinem Methan innerhalb von ca. 5 min auf Druck (ca. 80 bar) gebracht. Danach wird in einer zweiten Phase das Erdgas (500 Uh) über das MOF-Bett geleitet. Dabei werden CO₂, Ethan und höhere Kohlenwasserstoffe adsorptiv aus dem Erdgasstrom entfernt. Es entsteht ein methan-angereichertes Gasgemisch mit einem Brennwert im Bereich 10,9 - 11,3 kWh/Nm³. Ein ggf. gewünschter höherer Brennwert des Produktgases kann über einen Bypass eingestellt werden. Nach ca. 23 min steigt der Gehalt an CO₂, Ethan und höheren Kohlenwasserstoffen im Produktgas wieder an. Die Erdgaszufuhr wird gestoppt und der Reaktor auf Atmosphärendruck entspannt (dritte Phase). Anschließend wird mit 1500 Uh reinem Methan für 6 min gespült (vierte Phase). Die reversible Aufnahmekapazität des MOF-Materials beträgt ca. 9,5 wt% an CO₂, Ethan und höheren Kohlenwasserstoffen.

## Patentansprüche

1. Verfahren zur Anreicherung von Methan in Methan-haltigen Gasgemischen den Schritt umfassend:
Inkontaktbringen des Gasgemisches mit mindestens einem Sorbens enthaltend ein poröses metallorganisches Gerüstmaterial, wobei das Gerüstmaterial mindestens eine an mindestens ein Metallion koordinativ gebundene, mindestens zweizähnige organische Verbindung enthält.

2. Verfahren nach Anspruch 1, wobei das Methan-haltige Gasgemisch Erdgas umfasst.

3. Verfahren nach einem der Ansprüche 1 oder 2, wobei die Anreichung des Methans durch Abtrennung von C2-C4-Alkanen aus dem Methan-haltigen Gasgemisch erfolgt.

4. Verfahren nach Anspruch 3, wobei Ethan abgetrennt wird.

5. Verfahren nach einem der Ansprüche 1 bis 4, wobei der Methangehalt vor Anreicherung mindestens 33 Vol.-% im Methan-haltigen Gasgemisch beträgt.

6. Verfahren nach einem der Ansprüche 1 bis 5, wobei das Inkontaktbringen des Gasgemisches mit mindestens einem Sorbens durch kontinuierliche Adsorption erfolgt.

7. Verfahren nach einem der Ansprüche 1 bis 6, wobei mindestens eine der folgenden Bedingungen beim Inkontaktbringen des Gasgemisches mit dem Sorbens ein poröses metallorganisches Gerüstmaterial enthaltend vorliegt:
• Druck des Gasgemisches von 1 bar (Atmosphärendruck) bis 325 bar,
• Temperatur des Gasgemisches von -100°C bar bis +450°C,
• GHSV von 250 1/h bis 10000 1/h.

8. Verfahren nach einem der Ansprüche 1 bis 7, wobei das poröse metallorganische Gerüstmaterial mindestens eine der folgenden Eigenschaften aufweist:
a) spezifische Oberfläche > 5 m²/g (nach DIN 66131),
b) Porengröße des kristallinen MOF von 0,2 nm bis 30 nm,
c) Mindestens die Hälfte des Porenvolumens wird von Poren mit einem Porendurchmesser bis 1000 nm gebildet.

9. Verfahren nach einem der Ansprüche 1 bis 8, wobei das poröse metallorganische Gerüstmaterial Zn oder Cu als Metallion enthält und die mindestens zweizähnige organische Verbindung Terephthalsäure oder 1,3,5-Benzoltricarbonsärue ist.

10. Verwendung eines porösen metallorganischen Gerüstmaterials zur Anreicherung von Methan in einem Methan-haltigen Gasgemisch.
